# FASCICULE DE BREVET EUROPEEN

(11) **EP 4 639 019 B1**
(45) Date de publication et mention de la délivrance du brevet: **09.12.2026**
(21) Numéro de dépôt: 23834199.4
(22) Date de dépôt: 20.12.2023
(51) Int. Cl.: F21S 41/657, F21S 41/675, B60Q 1/076, F21S 41/148, F21S 41/26, F21S 41/265, F21S 41/50, F21S 41/55

(54) **MODULE LUMINEUX POUR VÉHICULE AUTOMOBILE COMPRENANT DES ÉLÉMENTS DE CONNEXION ARTICULÉS**
BELEUCHTUNGSMODUL FÜR EIN KRAFTFAHRZEUG MIT GELENKIG VERBUNDENEN ELEMENTEN
LIGHTING MODULE FOR A MOTOR VEHICLE COMPRISING ARTICULATED CONNECTION ELEMENTS

(30) Priorité: 21.12.2022 FR 2214188
(43) Date de publication de la demande: 29.10.2025
(73) Titulaire: Valeo Vision, 93012 Bobigny Cedex (FR)
(72) Inventeur: MARTIN, Nicolas, 93012 Bobigny cedex (FR); GIRAUD, Sylvain, 93012 BOBIGNY CEDEX (FR)
(74) Mandataire: Valeo Visibility
(86) Numéro de dépôt international: PCT/EP2023/086848
(87) Numéro de publication internationale: WO 2024/133394

(56) Documents cités:
- EP-A1- 3 021 042
- DE-A1- 10 213 453
- DE-A1- 102020 132 259
- DE-A1- 19 946 350
- FR-A1- 3 099 228
- FR-A1- 3 123 415
- JP-A- H0 729 404
- US-A- 5 142 455
- US-A1- 2013 215 634
- US-A1- 2017 284 620

## Description

La présente invention se rapporte à un module lumineux pour véhicule automobile. Elle concerne en particulier un module lumineux permettant de former un faisceau lumineux et permettant de déplacer ce faisceau lumineux dans une première direction, et éventuellement dans une deuxième direction.

Les documents JP H07 29404 A et DE 102 13 453 A1 donnent un aperçu du domaine technique de l'invention et montrent respectivement un modules lumineux destiné à l'éclairage adaptatif en virage et un module lumineux permettant de régler la portée du faisceau d'éclairage.

Dans le domaine des véhicules automobiles, un module lumineux pour véhicule bien connu de l'homme du métier comprend :
- une unité lumineuse comprenant au moins une source lumineuse configurée pour émettre des rayons lumineux, et au moins un collecteur associé à ladite au moins une source lumineuse,
- un élément optique de projection, le collecteur étant configuré pour collecter et orienter lesdits rayons lumineux émis par ladite au moins une source lumineuse vers l'élément optique de projection, ledit élément optique de projection étant configuré pour projeter lesdits rayons lumineux vers l'extérieur dudit véhicule pour former un faisceau lumineux.

Le module lumineux est destiné à être intégré dans un dispositif lumineux tel qu'un projecteur de véhicule automobile. Le dispositif lumineux comprend généralement un ou plusieurs masques qui sont positionnés à proximité du module lumineux, notamment par exemple autour de l'élément optique de projection. Ces masques sont des pièces de style qui permettent de venir cacher certaines parties du module lumineux, comme par exemple le collecteur, à un observateur extérieur.

Afin de pouvoir adapter le faisceau lumineux formé par le module lumineux au véhicule automobile sur lequel est monté le dispositif lumineux comprenant le module lumineux, et aux conditions de circulation, il est possible de déplacer le module lumineux de sorte à permettre un déplacement horizontal et/ou vertical du faisceau lumineux. Le déplacement vertical du faisceau lumineux est notamment utile pour prendre en compte les défauts de caisse du véhicule qui sont liés aux tolérances de fabrication, ou pour prendre en compte l'assiette du véhicule qui varie d'une catégorie de véhicule à une autre et qui varie selon la charge du véhicule. Le faisceau lumineux peut par exemple être rabattu pour éviter d'éblouir un occupant d'un véhicule qui arrive en face. Le déplacement horizontal du faisceau lumineux est utile pour régler la position du faisceau lumineux formé par le module lumineux par rapport à l'axe longitudinal médian du véhicule, par exemple pour compenser les défauts de caisse. Le déplacement horizontal du faisceau lumineux est également utile lorsque deux modules lumineux sont disposés dans le dispositif lumineux. En effet, il faut alors régler les deux modules lumineux entre eux, pour assurer un bon alignement du faisceau lumineux formé par chacun des modules lumineux l'un par rapport à l'autre et par rapport à l'axe longitudinal médian du véhicule.

Lorsque le module lumineux est déplacé pour régler le faisceau lumineux, l'ensemble des pièces qui le composent sont mises en mouvement, à savoir notamment ladite au moins une source lumineuse, ledit au moins un collecteur et ledit au moins un élément optique de projection.

Le ou les masques disposés à proximité du module lumineux sont au contraire immobiles lors de déplacement du module lumineux. Il faut donc prévoir un jeu suffisamment grand entre le ou les masques et le module lumineux pour que le module lumineux ne vienne pas buter contre le ou les masques lors de son déplacement.

Dans ce contexte, la présente invention vise à proposer un module lumineux pour véhicule automobile qui propose de résoudre l'inconvénient mentionné. Notamment, l'invention propose un module lumineux pour véhicule automobile qui permet de déplacer le faisceau lumineux qu'il forme, tout en minimisant les jeux nécessaires entre le module lumineux et les masques disposés à proximité du module lumineux, et notamment à proximité de l'élément optique de projection.

A cet effet, l'invention propose un module lumineux pour véhicule automobile, ledit module lumineux comprenant :
- une unité lumineuse comprenant au moins une source lumineuse configurée pour émettre des rayons lumineux et au moins un collecteur associé à ladite au moins une source lumineuse,
- un élément optique de projection présentant un axe optique, ledit collecteur étant configuré pour collecter et orienter lesdits rayons lumineux émis par ladite au moins une source lumineuse vers l'élément optique de projection, ledit élément optique de projection étant configuré pour projeter lesdits rayons lumineux vers l'extérieur dudit véhicule pour former un faisceau lumineux
- un support sur lequel est monté fixe l'élément optique de projection ;
- deux éléments de connexion chacun relié d'une part avec l'unité lumineuse et d'autre part avec le support, chaque élément de connexion étant configuré et articulé de manière à permettre un premier déplacement de l'unité lumineuse par rapport à l'élément optique de projection, ledit premier déplacement permettant de déplacer le faisceau lumineux selon une première direction orthogonale par rapport à l'axe optique de l'élément optique de projection.

Ainsi, grâce au déplacement de l'unité lumineuse par rapport à l'élément optique de projection, le faisceau lumineux peut être déplacé. Une fois le module lumineux monté sur un véhicule, il est donc possible d'ajuster la position du faisceau lumineux afin qu'il soit adapté au véhicule.

De plus, l'élément optique de projection étant monté fixe sur le support du module et l'unité lumineuse et les éléments de connexion étant mobiles par rapport à l'élément optique de projection, cela signifie que l'unité lumineuse et les éléments de connexion sont agencés mobiles par rapport audit support. Le mouvement de l'unité lumineuse sans la mise en mouvement de l'élément optique de projection est rendu possible par l'articulation des éléments de connexion. Cette articulation des éléments de connexion permet de déplacer uniquement l'unité lumineuse par rapport au support, tandis que l'élément optique de projection reste fixe sur le support, ou autrement dit, il reste immobile par rapport au support lors du premier déplacement.

Ainsi, par le déplacement de l'unité lumineuse, le faisceau lumineux peut être déplacé sans que l'élément optique de projection ne soit déplacé. Le module lumineux permet donc de déplacer le faisceau lumineux qu'il forme, sans déplacer l'élément optique de projection. Par conséquent, il est possible de disposer un masque à proximité immédiate de l'élément optique de projection. En effet, comme l'élément optique de projection est immobile lors du réglage du faisceau lumineux, l'élément optique de projection ne viendra par buter contre le masque lors de ce réglage.

On notera que dans le cadre de l'invention que le terme « premier » peut être compris comme signifiant « premier et unique » ou comme signifiant qu'il peut y avoir au moins un « deuxième » élément. Ainsi, l'unité lumineuse peut être déplacée selon un premier déplacement uniquement, ou comme il sera vu plus loin selon un premier et un deuxième déplacements. De même, le faisceau lumineux peut être déplacé selon une première et unique direction orthogonale ou comme il sera vu plus loin, selon une première et une deuxième directions orthogonales.

La première direction orthogonale par rapport à l'axe optique peut par exemple être une direction verticale ou direction transversale, définies lorsque le module lumineux est monté sur le véhicule automobile.

Le premier déplacement de l'unité lumineuse par rapport à l'élément de projection peut être une translation de l'unité lumineuse par rapport à l'élément de projection. On notera que cette translation peut être une translation rectiligne ou circulaire.

Selon une caractéristique de l'invention, les éléments de connexion sont disposés de part et d'autre de l'élément optique de projection et/ou de part et d'autre dudit au moins un collecteur.

Selon l'invention, chaque élément de connexion comporte une portion centrale, une portion avant et une portion arrière, la portion centrale et la portion arrière étant articulées par une liaison pivot arrière d'axe orthogonal à l'axe optique et à la première direction orthogonale, et la portion centrale et la portion avant étant articulées par une liaison pivot avant d'axe orthogonal à l'axe optique et à la première direction orthogonale.

Les liaisons pivots avant reliant les portions avant et centrale de chaque élément de connexion et les liaisons pivots arrière reliant les portions arrière et centrale de chaque élément de connexion permettent d'articuler les éléments de connexion. En particulier, au cours de son premier déplacement, l'unité lumineuse peut être déplacée suivant une translation circulaire grâce aux liaisons pivots avant et arrière, par rapport à l'élément optique de projection. Toutefois, au vu des dimensions du module lumineux, et notamment de la longueur des portions centrales des éléments de connexion, cette translation circulaire peut être assimilée à une translation suivant la première direction orthogonale.

Selon une caractéristique de l'invention, l'élément optique de projection est disposé en avant des liaisons pivot avant et l'unité lumineuse est attachée aux portions arrière.

Selon une caractéristique de l'invention, les liaisons pivot avant et arrière définissent les sommets d'un parallélogramme, en projection dans un plan défini par l'axe optique et la première direction orthogonale.

Selon une alternative, les liaisons pivot sont des liaisons flexibles à col semi-circulaires. Les portions avant, centrale et arrière de chaque élément de connexion peuvent alors être venues de matière. La réalisation des éléments de connexion en une seule pièce permet de simplifier l'assemblage du module lumineux et de réduire son encombrement général.

Selon une autre alternative, les portions avant, centrales et arrière sont formées par trois pièces distinctes. Selon un exemple, la portion centrale peut comprendre au moins un pion cylindrique avant et un pion cylindrique arrière d'axe orthogonal à l'axe optique et à la première direction orthogonale, et la portion avant peut comprendre un trou dans lequel le pion cylindrique avant est engagé de sorte à former la liaison pivot avant, et la portion arrière peut comprendre un trou dans lequel le pion cylindrique arrière est engagé de sorte à former la liaison pivot arrière. En particulier, la portion arrière de chaque élément de connexion peut être formé par une partie de l'unité lumineuse, comme par exemple le collecteur. La réalisation des éléments de connexion en trois parties distinctes permet de faciliter la fabrication des éléments de connexion.

Selon une alternative, la portion avant de chaque élément de connexion est montée fixe sur le support. Selon cette alternative, l'élément optique de projection peut être fixé aux portions avant des éléments de connexion. Chaque élément de connexion est alors relié avec l'élément optique de projection.

En particulier, le module lumineux peut comprendre au moins une barre transversale joignant les portions avant de chacun des éléments de connexions, les portions avant et ladite au moins un barre transversale formant un support de l'élément optique de projection.

Selon une autre alternative, la portion avant de chaque élément de connexion est montée mobile par rapport au support.

Selon une caractéristique de l'invention, chaque élément de connexion est configuré et articulé de manière à permettre un deuxième déplacement de l'unité lumineuse par rapport à l'élément optique de projection, ledit deuxième déplacement permettant de déplacer le faisceau lumineux selon une deuxième direction orthogonale par rapport à l'axe optique de l'élément optique de projection, et orthogonale à la première direction orthogonale.

La deuxième direction orthogonale par rapport à l'axe optique peut par exemple être une direction verticale, dans le cas où la première direction est une direction transversale ou être une direction transversale, dans le cas où la première direction est une direction verticale, les directions transversale et verticale étant définies lorsque le module lumineux est monté sur le véhicule automobile.

Ainsi, le faisceau lumineux peut être déplacé selon une deuxième direction, grâce au déplacement de l'unité lumineuse par rapport à l'élément optique de projection, l'élément optique de projection restant toujours immobile par rapport au support.

Selon une caractéristique de l'invention, la portion avant de chaque élément de connexion est reliée au support par une articulation supplémentaire permettant la rotation de l'unité lumineuse et des éléments de connexion autour d'un axe de rotation situé en avant des liaisons pivot avant et orienté suivant la première direction orthogonale.

Par exemple, chaque portion avant est articulée au support par une liaison pivot d'axe parallèle à la première direction orthogonale.

Ainsi, le module lumineux comporte les liaisons pivot avant et arrière pour permettre le premier déplacement de l'unité lumineuse, et la liaison pivot formée par les portions avant pour permettre le deuxième déplacement de l'unité lumineuse, ce qui permet de pouvoir régler indépendamment le premier déplacement et le deuxième déplacement. L'utilisation de ces liaisons pivot permet ainsi d'obtenir un module lumineux moins encombrant qu'un module utilisant des liaisons rotules.

Selon une caractéristique de l'invention, le module lumineux comprend une barre transversale s'étendant entre les portions avant de chaque élément de connexion. Cette barre transversale permet de rigidifier les éléments de connexion.

Selon une caractéristique de l'invention, l'élément optique de projection comporte un axe transversal médian agencé à une distance inférieure à 30 mm, de préférence inférieure à 15 mm, et encore plus préférentiellement inférieure à 5 mm de l'axe de rotation. Alternativement, l'axe transversal médian est confondu avec l'axe de rotation. Ainsi, lors du deuxième déplacement de l'unité lumineuse, la distance entre ladite au moins une source de lumière et l'axe transversal médian de l'élément optique de projection évolue peu, voire reste constant, ce qui limite la déformation du faisceau lumineux formé.

Selon une caractéristique de l'invention, le premier déplacement de l'unité lumineuse est destiné à être activé par un actionneur primaire, ladite unité lumineuse étant configurée pour être reliée à l'actionneur primaire par une liaison linéaire annulaire d'axe perpendiculaire à la première direction orthogonale et à l'axe optique. Ainsi, même lorsque l'unité lumineuse est déplacée suivant le deuxième déplacement, l'actionneur primaire peut toujours permettre de venir déplacer l'unité lumineuse selon le premier déplacement.

Alternativement, le premier déplacement de l'unité lumineuse est destiné à être activé par un actionneur primaire, ladite unité lumineuse étant configurée pour être reliée à l'actionneur primaire par une liaison linéaire annulaire d'axe l'axe optique.

Selon une caractéristique de l'invention, le deuxième déplacement de l'unité lumineuse est destiné à être activé par un actionneur secondaire, ladite unité lumineuse étant configurée pour être reliée à l'actionneur secondaire par une liaison linéaire annulaire d'axe parallèle à la première direction orthogonale. Ainsi, même lorsque l'unité lumineuse est déplacée suivant le premier déplacement, l'actionneur secondaire peut toujours permettre de venir déplacer l'unité lumineuse selon le deuxième déplacement.

Selon une caractéristique de l'invention, chaque collecteur comporte une surface réfléchissante. Le cas échéant, l'élément optique de projection peut être configuré pour faire l'image de la surface réfléchissante de chaque collecteur.

Par exemple, l'élément optique de projection comporte un ou plusieurs foyers objets, le bord arrière de chaque collecteur de l'unité lumineuse étant disposé à proximité du foyer objet ou d'un des foyers objets de l'élément optique de projection.

Selon une caractéristique de l'invention, l'élément optique de projection est une lentille de projection. L'élément optique de projection comporte alors un unique foyer objet, qui peut prendre la forme d'une ligne de foyer objet. Dans ce cas, l'axe optique de l'élément optique de projection correspond à l'axe optique de la lentille de projection. Alternativement, l'élément optique de projection est formé par une juxtaposition de lentilles de projection. Chaque lentille de projection formant l'élément optique de projection comporte alors un foyer objet. Dans ce cas, l'axe optique de l'élément optique de projection peut alors être considéré comme un axe optique moyen de l'élément optique de projection.

Alternativement, l'élément optique de projection peut être formé par un ou plusieurs miroirs ou toute autre combinaison de lentille(s) et miroir(s).

Selon une caractéristique de l'invention, l'unité lumineuse comporte au moins deux sources lumineuses, au moins deux collecteurs, au moins une source lumineuse étant associée à chaque collecteur, et au moins un élément de connexion additionnel disposé entre les deux collecteurs et entre lesdits deux éléments de connexion, appelés éléments de connexion latéraux, selon la première direction orthogonale, l'élément de connexion additionnel s'étendant longitudinalement entre l'unité lumineuse et l'élément optique de projection, et étant configuré et articulé de manière à permettre le premier déplacement de l'unité lumineuse par rapport à l'élément optique de projection ou le premier et le deuxième déplacement de l'unité lumineuse par rapport à l'élément optique de projection.

Il est en outre proposé un dispositif lumineux de véhicule automobile comprenant au moins un module lumineux selon l'invention.

Selon un mode de réalisation non limitatif, le dispositif lumineux est un projecteur.

Selon une caractéristique non limitative, le dispositif lumineux comporte un boitier présentant un renfoncement, le module lumineux étant disposé dans ledit renfoncement.

Selon une caractéristique non limitative, le support du module lumineux est formé par une portion du boitier ou une pièce solidaire au boitier.

Selon une caractéristique non limitative, le boitier comporte une ouverture disposée en avant du renfoncement, et le dispositif lumineux comporte une glace de fermeture fermant l'ouverture du boitier. Le module lumineux est alors situé entre le boitier et la glace de fermeture.

Alternativement, le boitier comporte une ouverture disposée en avant du renfoncement, et l'élément optique de projection ferme l'ouverture du boitier. Le dispositif lumineux est alors dépourvu de glace de fermeture. L'élément optique de projection joue le rôle de la glace de fermeture. En effet, comme l'élément optique de projection reste fixe lorsque le faisceau lumineux est déplacé, il peut venir fermer l'ouverture du boitier.

L'invention et ses différentes applications seront mieux comprises à la lecture de la description qui suit et à l'examen des figures qui l'accompagnent :
[Fig. 1] La figure 1 est une vue en perspective d'un module lumineux selon un premier mode de réalisation de l'invention, comprenant une unité lumineuse, un élément optique de projection monté fixe sur un support et des éléments de connexion de l'unité lumineuse au support,
[Fig. 2] La figure 2 est un schéma cinématique en perspective du module lumineux de la figure 1, montrant un premier déplacement de l'unité lumineuse par rapport à l'élément optique de projection,
[Fig. 3] La figure 3 est une vue de dessus et de côté du module lumineux de la figure 1, lors du premier déplacement de l'unité lumineuse par rapport à l'élément optique de projection tel qu'illustré sur la figure 2,
[Fig. 4] La figure 4 est une vue en perspective d'un module lumineux selon un deuxième mode de réalisation de l'invention, comprenant une unité lumineuse, un élément optique de projection monté fixe sur un support et des éléments de connexion de l'unité lumineuse au support,
[Fig. 5] La figure 5 est un schéma cinématique en perspective du module lumineux de la figure 4, montrant le module lumineux dans une position nominale,
[Fig. 6] La figure 6 est un schéma cinématique en perspective du module lumineux de la figure 4, montrant un premier déplacement de l'unité lumineuse par rapport à l'élément optique de projection,
[Fig. 7] La figure 7 est un schéma cinématique en perspective du module lumineux de la figure 4, montrant un deuxième déplacement de l'unité lumineuse par rapport à l'élément optique de projection,
[Fig. 8] La figure 8 est une vue de dessus et de côté du module lumineux de la figure 4, lorsqu'il est dans une position nominale, telle qu'illustrée sur la figure 5,
[Fig. 9] La figure 9 est une vue de dessus et de côté du module lumineux de la figure 4, lors du premier déplacement de l'unité lumineuse par rapport à l'élément optique de projection, tel qu'illustré sur la figure 6,
[Fig. 10] La figure 10 est une vue de dessus et de côté du module lumineux de la figure 4, lors du deuxième déplacement de l'unité lumineuse par rapport à l'élément optique de projection, tel qu'illustré sur la figure 7,
[Fig. 11] La figure 11 est une vue de dessus et de côté du module lumineux de la figure 4 lors d'un premier déplacement et d'un deuxième déplacement de l'unité lumineuse par rapport à l'élément optique de projection,
[Fig. 12] La figure 12 représente une vue de dessus d'une variante de réalisation du module de la figure 4, dans laquelle le module lumineux comporte un élément de connexion additionnel,
[Fig. 13] La figure 13 est une représentation schématique des rayons lumineux générés par une source lumineuse de l'unité lumineuse et orientés par un collecteur de l'unité lumineuse vers l'élément optique de projection,
[Fig. 14] La figure 14 est une vue en perspective d'un module lumineux selon une variante du deuxième mode de réalisation de l'invention, comprenant une unité lumineuse comprenant une pluralité de collecteurs, un élément optique de projection monté fixe sur un support et des éléments de connexion de l'unité lumineuse au support,
[Fig. 15] La figure 15 est une vue en perspective du module lumineux de la figure 15 dans lequel les collecteurs ont été retirés,
[Fig. 16] La figure 16 est une vue de dessus schématique d'un dispositif lumineux comportant un boitier avec une ouverture, une glace de fermeture fermant l'ouverture et un module lumineux selon l'invention disposé dans le boitier,
[Fig. 17] La figure 17 est une vue de dessus schématique d'un dispositif lumineux comportant un boitier avec une ouverture et un module lumineux selon l'invention disposé dans le boitier, l'élément optique de projection fermant l'ouverture du boitier.

Les éléments identiques, par structure ou par fonction, apparaissant sur différentes figures conservent, sauf précision contraire, les mêmes références.

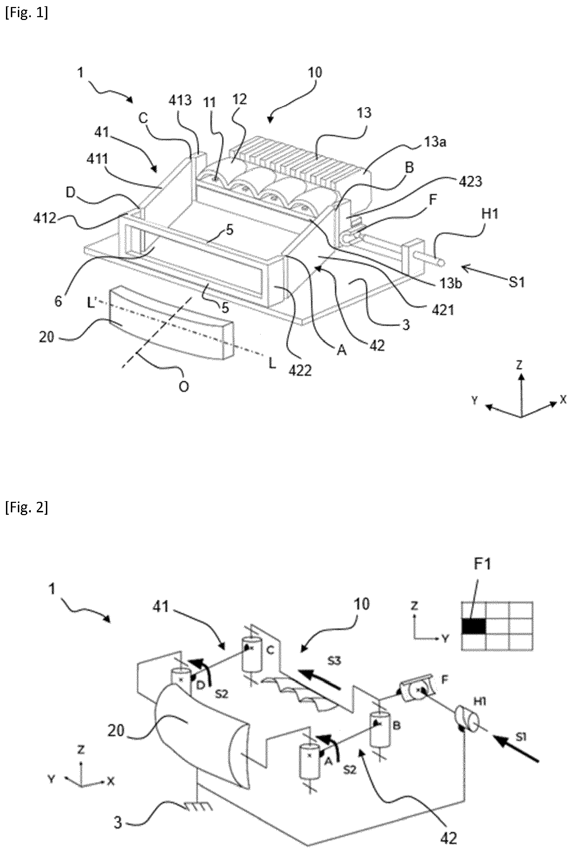

Les figures 1 à 3 illustrent un module lumineux 1 pour véhicule automobile selon un premier mode de réalisation de l'invention. Le module lumineux 1 est destiné à être monté dans un dispositif lumineux de véhicule automobile, tel qu'un projecteur avant de véhicule automobile. Le dispositif lumineux est lui-même destiné à être monté sur un véhicule automobile.

Dans la suite de la description, la direction longitudinale X sera comprise comme étant la direction longitudinale du véhicule dans lequel le module lumineux est destiné à être monté, par l'intermédiaire du dispositif lumineux, la direction transversale Y, perpendiculaire à la direction longitudinale X sera comprise comme étant la direction transversale audit véhicule, et la direction verticale Z sera comprise comme étant la direction perpendiculaire aux directions longitudinale X et transversale Y.

Le module lumineux 1 comprend une unité lumineuse 10, un élément optique de projection 20, un support 3 sur lequel est monté l'élément optique de projection 20 et deux éléments de connexion 41, 42 de l'unité lumineuse 10 au support 3. Sur la figure 1, l'élément optique de projection 20 est représenté en avant du support 3 pour des raisons de clarté, étant entendu que l'optique de projection 20 est normalement positionné sur le support 3.

L'unité lumineuse 10 comporte des sources lumineuses 11 et des collecteurs 12. Les sources lumineuses 11 sont toutes associées à un des collecteurs 12. Dans l'exemple illustré, un collecteur 12 est associé à chaque source lumineuse 11, étant entendu qu'il est également possible que plusieurs sources lumineuses 11 soient associées au même collecteur 12, sans sortir du cadre de l'invention. Les sources lumineuses 11 sont sélectivement activables.

L'unité lumineuse 10 comporte également un dissipateur thermique 13, permettant de dissiper la chaleur produite par les sources lumineuses 11. Le dissipateur thermique 13 comprend une plaque 13b s'étendant horizontalement, c'est-à-dire dans un plan comprenant les directions longitudinale X et transversale Y et une pluralité d'ailettes 13a s'étendant à l'arrière des collecteurs 12. Elles pourraient également s'étendre au-dessous des collecteurs, voire à la fois à l'arrière et au-dessous de collecteurs 11. Les sources lumineuses 11 sont disposées sur la plaque 13b. Elles peuvent être disposées directement ou indirectement. Dans le cas où les sources lumineuses 11 sont disposées indirectement, l'unité lumineuse 10 peut comprendre un circuit imprimé disposé sur la plaque 13b et sur lequel sont disposées les sources lumineuses 11. Les collecteurs 12 sont attachés au dissipateur thermique 13, notamment à la plaque 13b du dissipateur thermique 13. Le cas échéant, le circuit imprimé peut être pris en sandwich entre la plaque 13b et les collecteurs 12.

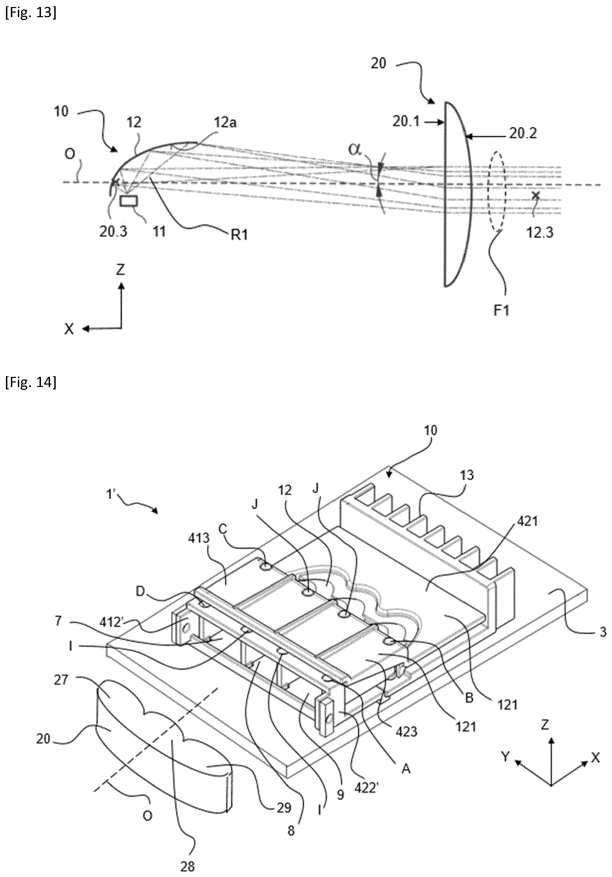

Chaque source lumineuse 11 est configurée pour émettre des rayons lumineux vers le collecteur 12 auquel elle est associée. Le collecteur 12 collecte et oriente les rayons lumineux vers l'élément optique de projection 20. En particulier, chaque collecteur 12 comporte une surface réfléchissante 12a (visible à la figure 13). La surface réfléchissante 12a de chaque collecteur 12 réfléchit les rayons lumineux émis par la ou les sources lumineuses 11 auquel il est associé vers l'élément optique de projection 20.

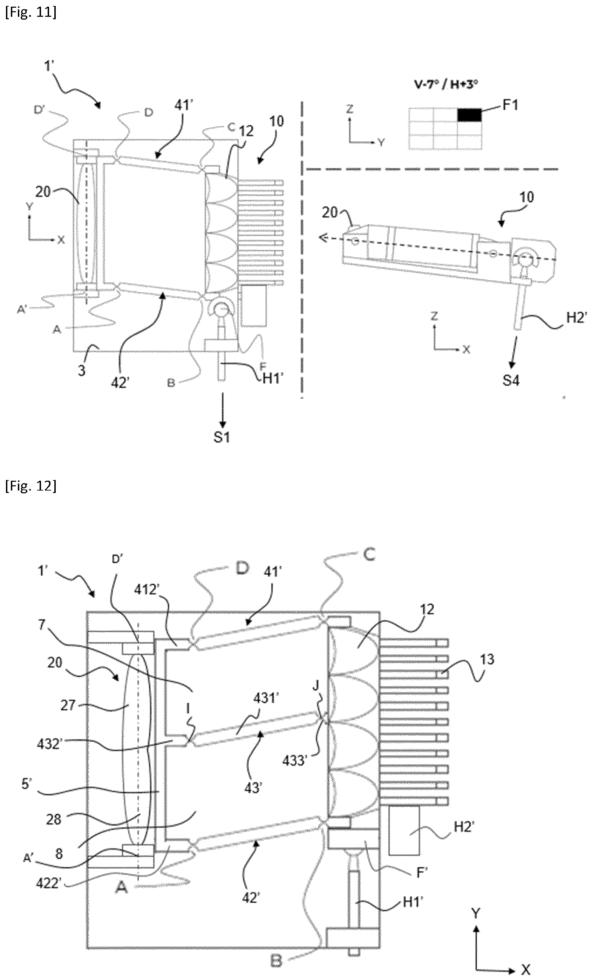

L'élément optique de projection 20 présente un axe optique O. Dans l'exemple illustré, l'axe optique O de l'élément optique de projection 20 est parallèle à la direction longitudinale X. L'élément optique de projection 20 est ici une lentille de projection. Comme il sera vu par la suite, notamment en référence aux figures 12 et 14, l'élément optique de projection 20 peut également être formé par une pluralité de lentilles de projection juxtaposées. Alternativement, l'élément optique de projection pourrait être formé par un ou plusieurs miroirs ou toute autre combinaison de lentille(s) et miroir(s).

L'élément optique de projection 20 reçoit les rayons lumineux réfléchis par les collecteurs 12 et projette ces rayons réfléchis vers l'extérieur du module lumineux 1, et vers l'extérieur du véhicule automobile sur lequel le module lumineux 1 est destiné à être monté, pour former un faisceau lumineux F1.

Le trajet des rayons lumineux émis par les sources de lumière 11, réfléchis par les collecteurs 12 et projetés par l'élément optique de projection 20 est illustré à la figure 13. Chaque collecteur 12 a une forme de type elliptique ou parabolique ou free form. La ou les sources lumineuses 11 associées au collecteur 12 sont disposées au premier foyer du collecteur 12, ou à proximité de ce premier foyer, par exemple à une distance inférieure à 10 mm. Les rayons lumineux R1 émis par la ou les sources lumineuses 11 sont alors collectés et réfléchis par la surface réfléchissante 12a du collecteur 12 vers l'élément optique de projection 20. Pour chaque collecteur 12, l'élément optique de projection 20 projette alors les rayons collectés et réfléchis sur la route et forme ainsi un sous-faisceau lumineux. L'ensemble des sous-faisceaux lumineux sont superposés pour former un faisceau lumineux F1.

L'élément optique de projection 20 comprend un foyer objet 20.3 disposé au voisinage d'un bord arrière d'au moins un des collecteurs 12 de l'unité lumineuse 10. Alternativement, l'élément optique de projection 20 peut présenter une ligne de foyer passant au voisinage d'un bord arrière de chacun des collecteurs 12. Par « au voisinage », on entend à une distance inférieure ou égale à 10 mm. L'élément optique de projection 20 forme ainsi une image de la surface réfléchissante 12a d'au moins un, voire de chaque collecteur 12. Les sous-faisceaux lumineux formés correspondant à cette image de la surface réfléchissante 12a.

En particulier, le bord arrière d'au moins un collecteur 12 peut comporter une découpe spécifique, l'élément optique de projection 20 projette ainsi cette découpe dans le sous-faisceau lumineux issus de la réflexion de rayons lumineux sur ce collecteur 12. Par exemple, le sous-faisceau lumineux peut ainsi présenter une coupure horizontale supérieure formée par la projection de la découpe par l'élément optique de projection 20.

Le faisceaux lumineux F1 peut par exemple être tout ou partie d'un faisceau de feu de croisement. Le faisceau lumineux F1 peut également être tout ou partie d'un faisceau de feu de route. Il est par exemple possible que certains collecteurs 12 contribuent uniquement à la formation du faisceau de feu de croisement, tandis que d'autres collecteurs 12 contribuent à la formation d'un faisceau de feu de route complémentaire, qui en combinaison avec le faisceau de feu de croisement permet de former le faisceau feu de route. Ainsi, les sources lumineuses 11 peuvent être sélectivement allumées ou éteintes pour former un faisceau de feu de croisement ou un faisceau de feu de route.

L'élément optique de projection 20 est monté fixe sur le support 3. Autrement dit, l'élément optique de projection 20 est toujours immobile par rapport au support 3.

L'élément optique de projection 20 et le support 3 d'une part, et l'unité lumineuse 10 d'autre part, sont reliés ensemble par les éléments de connexions 41, 42. Les éléments de connexion 41, 42 sont chacun relié d'une part avec l'unité lumineuse 10 et d'autre part avec le support 3.

Chaque élément de connexion 41, 42 est configuré et articulé de manière à permettre un premier déplacement de l'unité lumineuse 10 par rapport à l'élément optique de projection 20. Le premier déplacement permet de déplacer le faisceau lumineux F1 selon une première direction orthogonale par rapport à l'axe optique O de l'élément optique de projection 20.

Dans l'exemple illustré, la première direction orthogonale par rapport à l'axe optique O est une direction transversale Y. Dans une variante non illustrée, la première direction orthogonale pourrait être une direction verticale Z.

En particulier, les éléments de connexion 41, 42 sont disposés de part et d'autre de l'élément optique de projection 20 et des collecteurs 12 suivant la première direction orthogonale.

Chaque élément de connexion 41, 42 comporte une portion centrale 411, 421, une portion avant 412, 422 et une portion arrière 413, 423, la portion centrale 411, 421 et la portion arrière 413, 423 étant articulées par une liaison pivot arrière C, B d'axe orthogonal à l'axe optique O et à la première direction orthogonale Y, et la portion centrale 411, 421 et la portion avant 412, 422 étant articulées par une liaison pivot avant A, D d'axe orthogonal à l'axe optique O et à la première direction orthogonale Y. Dans toute la description, les directions avant et arrière sont données par rapport à la direction d'émission de la lumière dans le module lumineux 1, le long de l'axe optique O de l'élément optique de projection 20. La direction d'émission est opposée à la direction de l'axe longitudinal X représentée sur les figures.

L'unité lumineuse 10 est attachée aux éléments de connexion 41, 42 par les portions arrière 413, 423. Les portions arrière 413, 423 peuvent en particulier être formées par un élément de l'unité lumineuse 10, comme par exemple par le dissipateur thermique 13 ou un collecteur 12.

Le support 3 est attaché aux éléments de connexion 41, 42 par les portions avant 412, 422.

Dans le premier mode de réalisation, les portions avant 412, 422 sont montées fixes sur le support 3. On notera que contrairement aux portions avant 412, 422, les portions centrales 411, 421 et les portions arrière 413, 423 sont mobiles par rapport au support 3. Le module lumineux 1 comprend deux barres transversales 5 joignant les portions avant 412, 422 de chacun des éléments de connexions 41, 42. Les portions avant 412, 422 et les barres transversales 5 forment un support de l'élément optique de projection 20. Ainsi, l'élément optique de projection 20 qui est représenté en avant du support 15 pour la clarté de la figure 1, et en fait disposé dans la fenêtre 6 formée par les portions avant 412, 422 et les barres transversales 5. L'élément optique de projection 20 est ainsi fixé aux portions avant 412, 422 des éléments de connexion 41, 42. L'élément optique de projection 20 est ainsi disposé en avant des liaisons pivot avant A, D.

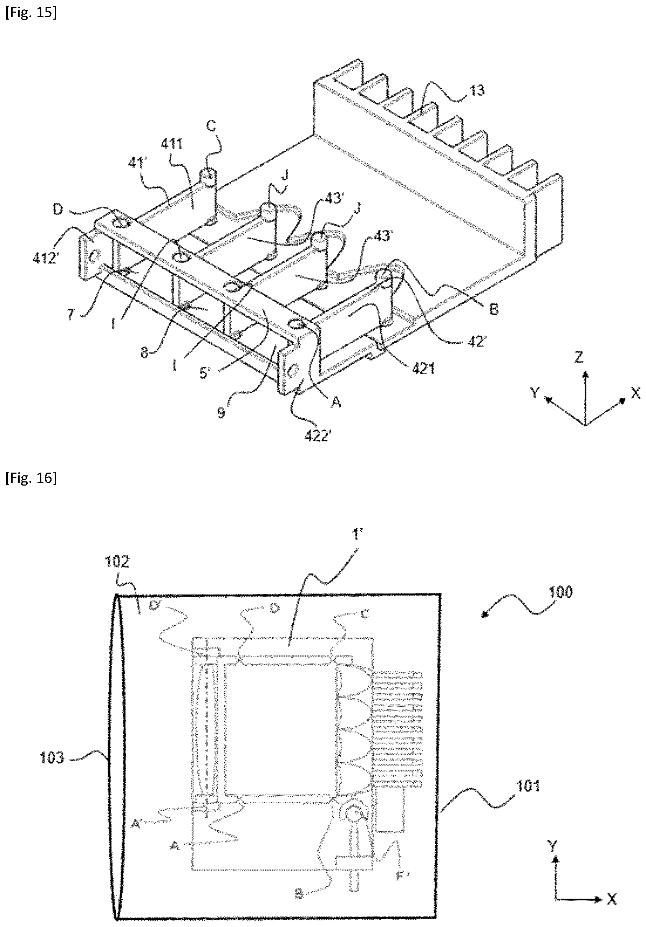

Dans l'exemple illustré sur la figure 1, les liaisons pivot avant A, D et arrière B, C sont formées par des liaisons flexibles à col semi-circulaires. Il sera vu par la suite, en référence aux figures 14 et 15 que les liaisons pivot avant A, D peuvent également être formées par au moins un pion cylindrique disposé sur l'une de la portion centrale 411, 421 et de la portion avant 412, 422 et un trou coopérant avec le pion disposé sur l'autre de la portion centrale 411, 421 et de la portion avant 412, 422, et les liaisons pivot arrière B, C peuvent être formées par au moins un pion cylindrique disposé sur l'une de la portion centrale 411, 421 et de la portion arrière 413, 423 et un trou disposé sur l'autre de la portion centrale 411, 421 et de la portion arrière 413, 423.

Les liaisons pivot avant A, D et arrière B, C définissent les sommets d'un parallélogramme, en projection dans un plan défini par l'axe optique O et la première direction orthogonale Y. Autrement dit, les portions centrales 411, 421 sont de même longueur et parallèles.

Le premier déplacement de l'unité lumineuse est activé par un actionneur primaire H1. La cinématique du module lumineux 1 lors du déplacement du faisceau lumineux F1 selon la première direction orthogonale Y est illustrée à la figure 2. On peut voir sur la figure 2 que l'unité lumineuse 10 est reliée à l'actionneur primaire H1 par une liaison linéaire annulaire F d'axe l'axe optique O.

Sur la figure 2, un déplacement S1 est exercé sur l'actionneur primaire H1, l'actionneur primaire H1 pousse l'unité lumineuse 10, en particulier le dissipateur thermique 13 sur lequel sont disposés les collecteurs 12 et les sources lumineuses 11. L'unité lumineuse 10 suit le déplacement induit par l'actionneur primaire H1 et est déplacée suivant une translation circulaire grâce aux liaisons pivots avant A, D et arrière C, D. Toutefois, au vu des dimensions du module lumineux, et notamment de la longueur des portions centrales 411, 421 des éléments de connexion 41, 42, cette translation circulaire peut être assimilée à une translation suivant la direction transversale Y. Ce mouvement est représenté par la flèche S3 sur la figure 2.

Lors du premier déplacement de l'unité lumineuse 10, l'élément optique de projection 20 reste fixe. En effet, grâce aux liaisons pivot avant A, D et arrière C, D seules les portions arrières 413, 423 et les portions centrales 411, 421 sont déplacées, en pivotant autour des liaisons pivot avant A, D et arrière C, D, comme le montre les flèches S2. Il y a donc un déplacement relatif entre l'unité lumineuse 10 et l'élément optique de projection 20, de sorte que le faisceau lumineux F1 est déplacé horizontalement.

Suite au déplacement S1 de l'actionneur primaire H1, le faisceau lumineux F1 se trouve alors au niveau de la zone noire sur la grille représentée sur la figure 2, alors qu'il était auparavant, c'est-à-dire avant l'actionnement de l'actionneur primaire H1, au centre de la grille. Le faisceau lumineux F1 est ainsi déplacé suivant la direction transversale Y.

La figure 2 illustre le cas où l'actionneur primaire H1 pousse sur l'unité lumineuse 10, étant entendu qu'il peut également tirer l'unité lumineuse. Dans ce cas, le faisceau lumineux F1 est décalé dans l'autre sens, c'est-à-dire vers la droite sur la grille représentée à la figure 2.

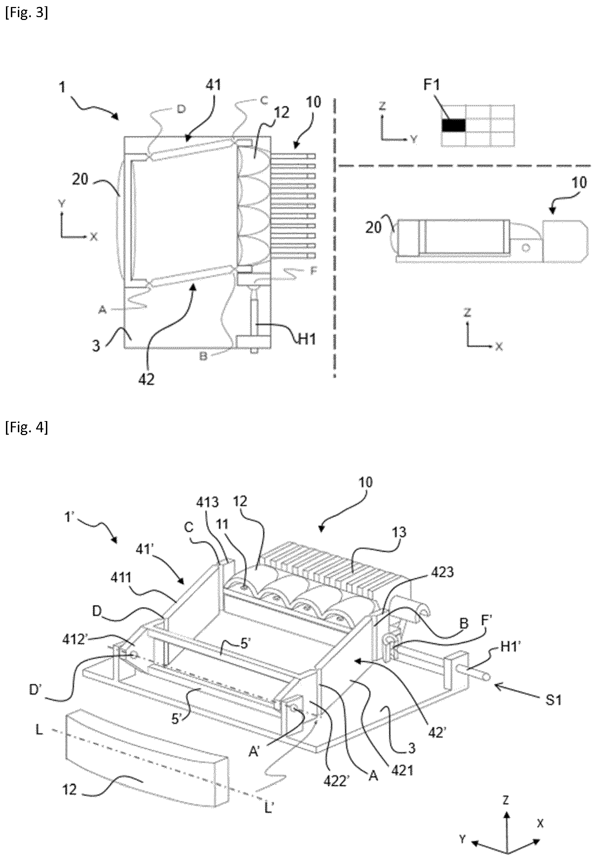

La figure 3 illustre en vue de dessus et en vue de côté, la position de l'élément optique de projection 20, des éléments de connexion 41, 42 et de l'unité lumineuse 10 lorsque le déplacement S1 est exercé sur l'actionneur primaire H1. On observe ainsi la translation suivant la direction transversale Y de l'unité lumineuse 10.

On notera que dans le premier mode de réalisation décrit en référence aux figures 1 à 3, le premier faisceau lumineux F1 peut être déplacé uniquement selon la première direction orthogonale, et ne peut pas être déplacé selon une deuxième direction orthogonale, telle que la direction verticale Z. En effet, comme les portions avant 412, 422 sont montées fixes sur le support 3, l'unité lumineuse 10 ne peut pas être déplacée verticalement par rapport au support 3 et à l'élément optique de projection 20.

Les figures 4 à 11 illustrent un module lumineux 1' pour véhicule automobile selon un deuxième mode de réalisation de l'invention. Les éléments communs avec le premier mode de réalisation portent les mêmes références numériques que dans le premier mode de réalisation, et la description de ces éléments faite en référence au premier mode de réalisation s'applique mutatis mutandis au deuxième mode de réalisation, sauf mention contraire. Leur description ne sera donc pas reprise.

A la différence du premier mode de réalisation où le premier faisceau lumineux F1 ne peut être déplacé que selon la première direction orthogonale, dans le deuxième mode de réalisation, le premier faisceau lumineux F1 peut être déplacé à la fois selon une première direction orthogonale par rapport l'axe optique O, et selon une deuxième direction orthogonale par rapport à l'axe optique O. Dans l'exemple illustré, la première direction orthogonale par rapport à l'axe optique O est une direction transversale Y, et la deuxième direction orthogonale Z par rapport à l'axe optique est une direction verticale Z. Dans une variante non illustrée, la première direction orthogonale pourrait être la direction verticale Z, et la deuxième direction orthogonale pourrait être la direction transversale Y.

Afin de permettre de déplacer le premier faisceau lumineux F1 selon la deuxième direction orthogonale Z, le module lumineux 1' comporte des éléments de connexion 41', 42' qui diffèrent des éléments de connexion 41, 42 du premier mode de réalisation. Les éléments de connexion 41', 42' sont configurés et articulés de manière à permettre, en plus du premier déplacement décrit ci-dessus en référence au premier mode de réalisation, un deuxième déplacement de l'unité lumineuse 10 par rapport à l'élément optique de projection 20.

Dans le deuxième mode de réalisation, la portion avant 412', 422' de chaque élément de connexion 41', 42' diffère de celle du premier mode de réalisation. Les portions centrale 411, 421 et les portions arrière 413, 423 sont identiques à celles du premier mode de réalisation. La portion avant 412', 422' de chaque élément de connexion 41', 42' est reliée au support 3 par une articulation supplémentaire permettant la rotation de l'unité lumineuse 10 et des éléments de connexion 41', 42' autour d'un axe de rotation situé en avant des liaisons pivot avant A, D et orienté suivant la première direction orthogonale Y. En particulier, chaque portion avant 412', 422' est articulée au support 3 par une liaison pivot D', A' d'axe parallèle à la première direction orthogonale Y.

Le module lumineux 1' comprend deux barres transversales 5' s'étendant entre les portions avant 412', 422' de chaque élément de connexion 41', 42'. Ces barres transversales 5' permettent de rigidifier les éléments de connexion 41', 42'.

L'élément optique de projection 20 comporte un axe transversal médian LL' confondu avec l'axe de rotation des liaisons pivot A', D'. Alternativement, l'axe transversal médian LL' peut être agencé à une distance inférieure à 30 mm, de préférence inférieure à 15 mm, et encore plus préférentiellement inférieure à 5 mm de l'axe de rotation. Ainsi, lors du deuxième déplacement de l'unité lumineuse 10, la distance entre les sources de lumière 11 et l'axe transversal médian LL' de l'élément optique de projection 20 reste constant, ce qui limite la déformation du faisceau lumineux F1 formé.

L'élément optique de projection 20 est représenté en avant du support 3 à des fins de clarté de la figure 4. L'élément optique de projection 20 est positionné sur le support 3, en avant des liaisons pivot avant A, D. Contrairement au premier mode de réalisation, l'élément optique de projection 20 n'est pas attaché aux portions avant 412', 422' des éléments de connexion 41', 42'.

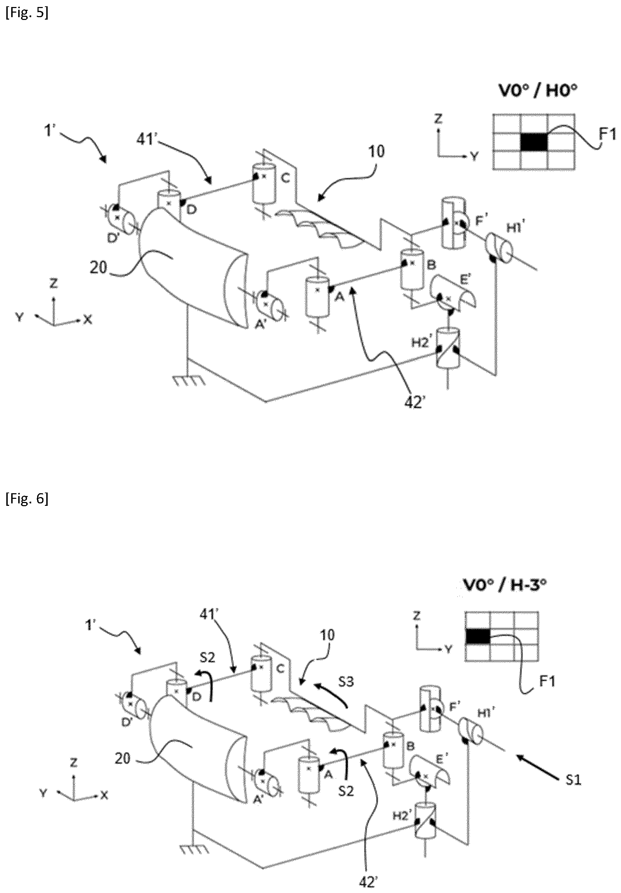

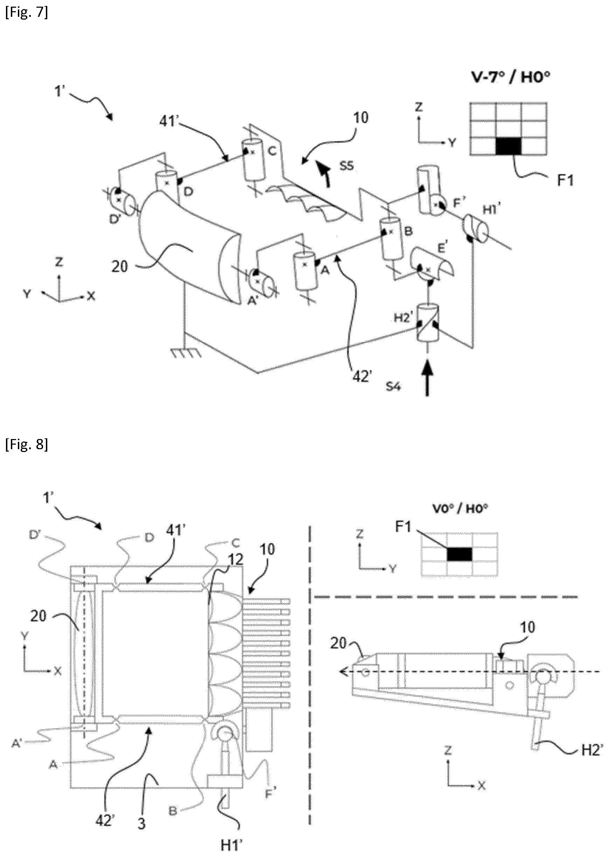

La figure 5 illustre une vue cinématique du module lumineux 1' lorsqu'il est dans une position de référence ou position nominale. Le faisceau lumineux F1 se trouve alors au centre de la grille. La figure 8 illustre en vue de dessus et en vue de côté, la position de l'élément optique de projection 20, des éléments de connexion 41', 42' et de l'unité lumineuse 10 lorsque le module lumineux 1' est dans la position de référence. Les portions centrales 411, 421 s'étendent parallèlement à la direction longitudinale X. On notera que dans l'exemple illustré, les portions arrières 412, 423 et les portions avant 412', 422' s'étendent également parallèlement à la direction longitudinale X dans la position nominale.

La cinématique du module lumineux 1' lors du déplacement du faisceau lumineux F1 selon la première direction orthogonale est illustrée à la figure 6. Tout comme pour le premier mode de réalisation, le premier déplacement de l'unité lumineuse 10 est activé par un actionneur primaire H1', toutefois, dans ce deuxième mode de réalisation, l'unité lumineuse 10 est reliée à l'actionneur primaire H1' par une liaison linéaire annulaire F' d'axe perpendiculaire à la première direction orthogonale Y et à l'axe optique O. Ainsi, même lorsque l'unité lumineuse 10 est déplacée suivant le deuxième déplacement, c'est-à-dire suivant la direction verticale Z, l'actionneur primaire H1' peut toujours permettre de venir déplacer l'unité lumineuse 10 selon le premier déplacement.

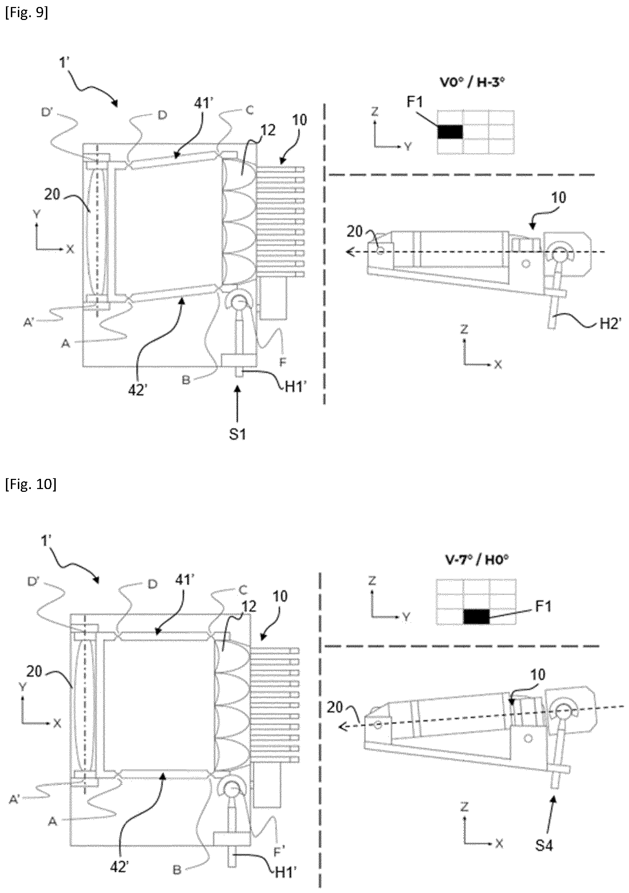

La figure 9 illustre en vue de dessus et en vue de côté, la position de l'élément optique de projection 20, des éléments de connexion 41, 42 et de l'unité lumineuse 10 lorsque le déplacement S1 est exercé sur l'actionneur primaire H1'. On observe ainsi la translation suivant la direction transversale Y de l'unité lumineuse 10. Le faisceau lumineux F1 est déplacé depuis le centre de la grille telle que visible aux figures 5 et 8, vers la zone noire sur la grille représentée sur les figures 6 et 9.

La cinématique du module lumineux 1' lors du déplacement du faisceau lumineux F1 selon la deuxième direction orthogonale est illustrée à la figure 7. Le deuxième déplacement de l'unité lumineuse 10 est activé par un actionneur secondaire H2'. L'unité lumineuse 10 est reliée à l'actionneur secondaire H2' par une liaison linéaire annulaire E' d'axe parallèle à la première direction orthogonale Y. Ainsi, même lorsque l'unité lumineuse 10 est déplacée suivant le premier déplacement, l'actionneur secondaire H2' peut toujours permettre de venir déplacer l'unité lumineuse 10 selon le deuxième déplacement.

Sur la figure 7, un déplacement S4 est exercé sur l'actionneur secondaire H2', l'actionneur secondaire H2' pousse l'unité lumineuse 10, en particulier le dissipateur thermique 13 sur lequel sont disposés les collecteurs et les sources lumineuses 11. L'unité lumineuse 10 suit le déplacement induit par l'actionneur secondaire H2', et est déplacée suivant une L'unité lumineuse 10 suit le déplacement induit par la force S4, et est déplacée suivant une rotation autour de l'axe de rotation formé par les liaisons pivot A', D'.. Ce mouvement est représenté par la flèche S5 sur la figure 7.

Lors du deuxième déplacement de l'unité lumineuse 10, l'élément optique 20 reste fixe par rapport au support 3. Seuls les éléments de connexion 41', 42' et l'unité lumineuse 10 pivotent autour des liaisons pivot A', D' formées entre les portions avant 412', 422' et le support 3, et sont donc déplacés par rapport au support 3. Il y a donc un déplacement relatif entre l'unité lumineuse 10 et l'élément optique de projection 20, de sorte que le faisceau lumineux F1 est déplacé verticalement.

Suite au déplacement S4 de l'actionneur secondaire H2', le faisceau lumineux F1 se trouve alors au niveau de la zone noire sur la grille représentée sur la figure 7, alors qu'il était auparavant, c'est-à-dire avant l'actionnement de l'actionneur secondaire H2', au centre de la grille tel que visible sur la figure 5. Le faisceau lumineux F1 est ainsi déplacé suivant la direction verticale Z.

La figure 7 illustre le cas où l'actionneur secondaire H2' pousse sur l'unité lumineuse 10, étant entendu qu'il peut également tirer l'unité lumineuse 10. Dans ce cas, le faisceau lumineux F1 est décalé dans l'autre sens, c'est-à-dire vers le haut sur la grille représentée à la figure 7.

La figure 10 illustre en vue de dessus et en vue de côté, la position de l'élément optique de projection 20, des éléments de connexion 41, 42 et de l'unité lumineuse 10 lorsque le déplacement S4 est exercé sur l'actionneur secondaire H2'. On observe ainsi la rotation de l'unité lumineuse 10 autour de l'axe de rotation formé par les liaisons pivot A', D'.

La figure 11 illustre en vue de dessus et en vue de côté, la position de l'élément optique de projection 20, des éléments de connexion 41, 42 et de l'unité lumineuse 10 lorsque l'unité lumineuse 10 est déplacée à la fois suivant le premier déplacement par l'intermédiaire de l'actionneur primaire H1' et suivant le deuxième déplacement par l'intermédiaire de l'actionneur secondaire H2'. L'unité lumineuse 10 est alors translatée suivant les la direction transversale Y et pivotée autour de l'axe de rotation formé par les liaisons pivot A', D'. Dans cet exemple, le déplacement S1 de l'actionneur primaire H1' vient tirer sur l'unité lumineuse 10, et le déplacement S4 de l'actionneur secondaire H2' vient également tirer sur l'unité lumineuse 10. Le faisceau lumineux F1 est déplacé vers la droite et vers le haut sur la grille par rapport à la position de référence illustrée aux figures 5 et 8.

La figure 12 présente une variante de réalisation du module lumineux 1' selon le deuxième mode de réalisation. Selon cette variante, le module lumineux 1' comporte un élément de connexion additionnel 43' disposé entre les deux éléments de connexion 41', 42', appelés éléments de connexion latéraux. Tous les autres éléments du module lumineux 1' selon cette variante sont identiques à ceux décrits en référence aux figures 4 à 11. Sans sortir du cadre de l'invention, le module lumineux 1' pourrait comprendre plusieurs éléments de connexion additionnel.

L'élément de connexion additionnel 43' est disposé selon la première direction orthogonale Y entre deux collecteurs 12. L'élément de connexion additionnel 43' s'étend longitudinalement entre l'unité lumineuse 10 et l'élément optique de projection 20, et est configuré et articulé de manière à permettre le premier et le deuxième déplacement de l'unité lumineuse 10 par rapport à l'élément optique de projection 20. L'élément de connexion additionnel 43' forme alors un séparateur au sein de module lumineux 1'.

En particulier, l'élément de connexion additionnel 43' définit avec les éléments de connexion latéraux 41', 42' des cavités optiques 7, 8 au sein du module lumineux 1', une cavité optique 7, 8 étant délimitée par deux éléments de connexion 41', 42', 43' successifs. Chaque cavité optique 7, 8 comprend en particulier le ou les collecteurs 12 disposés entre les deux éléments de connexion 41', 42', 43' successifs considérés, et la ou les sources lumineuses 11 associées à chacun des collecteurs 12.

L'élément de connexion additionnel 43' empêche alors les rayons parasites entre les cavités optiques 7, 8 du module lumineux 1'. En particulier, l'élément de connexion additionnel 43' évite que les rayons lumineux émis par la ou les sources lumineuses 11 d'une cavité optique 7, 8 n'atteignent une autre cavité optique 7, 8.

Dans ce cas, chaque cavité optique 7, 8 peut comporter une lentille de projection 27, 28 qui lui est propre. En particulier, l'élément optique de projection 20 peut être formé par la juxtaposition des lentilles de projection 27, 28 de chaque cavité optique 7, 8.

L'élément de connexion additionnel 43' comporte une portion centrale 431', une portion avant 432', une portion arrière 433', la portion centrale 431' et la portion arrière 433' étant articulées par une liaison pivot arrière J d'axe orthogonal à l'axe optique O et à la première direction orthogonale Y, et la portion centrale 431' et la portion avant 432' étant articulées par une liaison pivot avant 1 d'axe orthogonal à l'axe optique O et à la première direction orthogonale Y.

Les liaisons pivot avant I et arrière J sont des liaisons flexibles à col semi-circulaires. Les portions avant 432', centrale 431' et arrière 433' de l'élément de connexion additionnel peuvent alors être venues de matière. La réalisation des éléments de connexion en une seule pièce permet de simplifier l'assemblage du module lumineux et de réduire son encombrement général. Selon une alternative, la portion centrale 431' pourrait comprendre au moins un pion cylindrique avant et un pion cylindrique arrière d'axe orthogonal à l'axe optique et à la première direction orthogonale, et la portion avant 432' pourrait comprendre un trou dans lequel le pion cylindrique avant serait engagé de sorte à former la liaison pivot avant I, et la portion arrière 433' pourrait comprendre un trou dans lequel le pion cylindrique arrière serait engagé de sorte à former la liaison pivot arrière J. En particulier, la portion arrière 433' de l'élément de connexion additionnel 43' peut être formé par une partie de l'unité lumineuse 10, comme par exemple le collecteur. La réalisation des éléments de connexion en trois parties distinctes permet de faciliter la fabrication des éléments de connexion.

Les liaisons pivot avant I et arrière J de l'élément de connexion additionnel 43' définissent avec les liaisons pivot avant A, D et arrière C, D de chacun desdits élément de connexion latéraux 41', 42', les sommets d'un parallélogramme, en projection dans un plan défini par l'axe optique O et la première direction orthogonale Y. Ainsi, l'élément de connexion additionnel 43' peut suivre la déformation desdits éléments de connexion latéraux 41', 42' lors du premier déplacement de l'unité lumineuse 10.

La portion arrière 433' de l'élément de connexion additionnel 43' est attachée à l'unité lumineuse 10. La portion avant 432' de l'élément de connexion additionnel peut être reliée aux portions avant 412', 422' des éléments de connexion latéraux 41', 42', par exemple via la barre transversale 5'. Ainsi, l'élément de connexion additionnel 43 peut suivre la déformation desdits éléments de connexion latéraux 41, 42 lors du deuxième déplacement de l'unité lumineuse 10.

L'élément de connexion additionnel 43' décrit en référence au deuxième mode de réalisation peut également être présent dans le module lumineux 1 selon le premier mode de réalisation. La seule différence sera la portion avant 432' de l'élément de connexion additionnel qui sera soit reliée aux portions avant 412, 422 des éléments de connexion latéraux 41', 42', par exemple via la barre transversale 5 ou qui sera soit montée fixe au support 3.

Les figures 14 et 15 illustrent une autre variante du module lumineux 1' selon le deuxième mode de réalisation. Dans cette variante, les liaisons pivot avant A, D sont formées par un pion cylindrique disposé sur la portion centrale 411, 421 et un trou disposé sur la portion avant 412', 422', coopérant avec le pion cylindrique sur la portion centrale 411, 421. Les liaisons pivot arrière B, C sont formées par un pion cylindrique disposé sur la portion centrale 411, 421 et un trou disposé sur la portion arrière 413, 423, coopérant avec le pion cylindrique sur la portion centrale 411, 421. Les pions cylindriques s'étendent selon la direction verticale Z. Alternativement, les trous pourraient se trouver sur la portion centrale 411, 421 et les pions cylindriques pourraient se trouver sur les portions avant 412', 422' et les portions arrière 413, 423 sans sortir du cadre de l'invention.

Lors de l'activation de l'actionneur primaire H1', les pions cylindriques et les trous pivotent les uns par rapport aux autres, de sorte à permettre le premier déplacement de l'unité lumineuse 10 par rapport au support 3 et à la l'élément optique de projection 20.

Dans cet exemple, on notera que les collecteurs 12 font partie d'une pièce capot 121 prolongeant les collecteurs 12 vers l'avant et vers l'arrière du module lumineux 1'. Cette pièce capot 121 fait partie de l'unité lumineuse 10. Les portions arrière 413, 423 des éléments de connexion 41', 42' sont formées par la pièce capot 121.

Sur la figure 15, la pièce capot 121, le support 3 et l'élément optique de projection 20 ont été retirés. Les deux éléments de connexion additionnelles 43' du module lumineux 1' représentés sont alors d'avantage visibles. Dans cette variante, le module lumineux 1' comprend ainsi 3 cavités optiques 7, 8, 9, chacune associée à une lentille de projection 27, 28, 29. L'élément optique de projection 20 est formé par la juxtaposition de chacune de ces lentilles de projection 27, 28, 29.

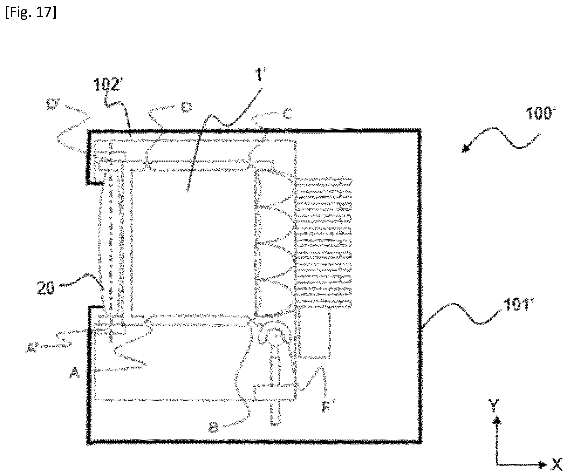

Les figures 16 et 17 représentent chacune une alternative d'un dispositif lumineux dans lequel le module lumineux selon l'invention peut être intégré. Le dispositif lumineux peut être un projecteur avant de véhicule automobile.

Sur la figure 16, le dispositif lumineux 100 comporte un boitier 101 présentant un renfoncement 102 formant un logement, et une ouverture. Le dispositif lumineux 100 comporte également une glace de fermeture 103 fermant l'ouverture. Le module lumineux 1' selon le deuxième mode de réalisation de l'invention est disposé dans le logement, et est ainsi situé entre les parois formant le boitier 101 et la glace de fermeture 103. Il est entendu que le module lumineux 1 pourrait être disposé dans le logement sans sortir du cadre de l'invention. Le support 3 du module lumineux 1, 1' est formé par une portion du boitier 101 ou une pièce solidaire au boitier 101.

Sur la figure 17, le dispositif lumineux 100' comporte un boitier 101' présentant un renfoncement 102' formant un logement, et une ouverture. Le module lumineux 1' selon le deuxième mode de réalisation de l'invention est disposé dans le logement. Il est entendu que le module lumineux 1 pourrait être disposé dans le logement sans sortir du cadre de l'invention. L'élément optique de projection 20 du module lumineux 1', formé par une lentille de projection ou une juxtaposition de lentilles de projection, ferme l'ouverture du boitier 101'. Le dispositif lumineux 100' est alors dépourvu de glace de fermeture, ce qui permet de gagner environ 15% d'efficacité pour le dispositif lumineux 100'. L'élément optique de projection 20 joue le rôle de la glace de fermeture. En effet, comme l'élément optique de projection 20 reste fixe lorsque le faisceau lumineux F1 est déplacé suivant le premier déplacement ou selon le premier déplacement et le deuxième déplacement, l'élément optique de projection 20 peut venir fermer l'ouverture du boitier 101'.

## Revendications

1. Module lumineux (1 ; 1') pour véhicule automobile, ledit module lumineux (1 ; 1') comprenant :
*une unité lumineuse (10) comprenant :
- au moins une source lumineuse (11) configurée pour émettre des rayons lumineux (R1),
- au moins un collecteur (12) associé à ladite au moins une source lumineuse (11),
*un élément optique de projection (20) présentant un axe optique (O), ledit collecteur (12) étant configuré pour collecter et orienter lesdits rayons lumineux (R1) émis par ladite au moins une source lumineuse (11) vers l'élément optique de projection (20), ledit élément optique de projection (20) étant configuré pour projeter lesdits rayons lumineux (R1) vers l'extérieur dudit véhicule pour former un faisceau lumineux (F1),
* un support (3) sur lequel est monté fixe l'élément optique de projection (20) ;
*deux éléments de connexion (41, 42 ; 41', 42') chacun relié d'une part avec l'unité lumineuse (10) et d'autre part avec le support (3), chaque élément de connexion étant configuré et articulé de manière à permettre un premier déplacement de l'unité lumineuse (10) par rapport à l'élément optique de projection (20), ledit premier déplacement permettant de déplacer le faisceau lumineux (F1) selon une première direction orthogonale (Y) par rapport à l'axe optique (O) de l'élément optique de projection (20) ;
**caractérisé en ce que** chaque élément de connexion (41, 42 ;41', 42') comporte une portion centrale (411, 421), une portion avant (412, 422 ; 412', 422') et une portion arrière (413, 423), la portion centrale et la portion arrière étant articulées par une liaison pivot arrière (B, C) d'axe orthogonal à l'axe optique et à la première direction orthogonale, et la portion centrale et la portion avant étant articulées par une liaison pivot avant (A, D) d'axe orthogonal à l'axe optique et à la première direction orthogonale.

2. Module lumineux (1 ; 1') selon la revendication 1, dans lequel l'élément optique de projection (20) est disposé en avant des liaisons pivot avant (A, D) et l'unité lumineuse (10) est attachée aux portions arrière (413, 423).

3. Module lumineux (1 ; 1') selon la revendication 2, dans lequel les liaisons pivot avant (B, C) et arrière (A, D) définissent les sommets d'un parallélogramme, en projection dans un plan défini par l'axe optique (O) et la première direction orthogonale (Y).

4. Module lumineux (1') selon l'une des revendications 1 à 3, dans lequel le premier déplacement de l'unité lumineuse (10) est destiné à être activé par un actionneur primaire (H1'), ladite unité lumineuse (10) étant configurée pour être reliée à l'actionneur primaire (H1') par une liaison linéaire annulaire (F') d'axe perpendiculaire à la première direction orthogonale (Y) et à l'axe optique (O).

5. Module lumineux (1') selon l'une des revendications 1 à 4, dans lequel chaque élément de connexion (41', 42') est configuré et articulé de manière à permettre un deuxième déplacement de l'unité lumineuse (10) par rapport à l'élément optique de projection (20), ledit deuxième déplacement permettant de déplacer le faisceau lumineux (F1) selon une deuxième direction orthogonale (Z) par rapport à l'axe optique (O) de l'élément optique de projection (20), et orthogonale à la première direction orthogonale (Y).

6. Module lumineux (1') selon la revendication 5, dans lequel la portion avant (412', 422') de chaque élément de connexion est reliée au support (3) par une articulation supplémentaire permettant la rotation de l'unité lumineuse (10) et des éléments de connexion (41', 42') autour d'un axe de rotation situé en avant des liaisons pivot avant (A, D) et orienté suivant la première direction orthogonale (Y).

7. Module lumineux (1') selon la revendication 6, dans lequel l'élément optique de projection (20) comporte un axe transversal médian (LL') confondu avec l'axe de rotation

8. Module lumineux (1') selon l'une des revendications 5 à 7, dans lequel le deuxième déplacement de l'unité lumineuse (10) est destiné à être activé par un actionneur secondaire (H2'), ladite unité lumineuse (10) étant configurée pour être reliée à l'actionneur secondaire (H2') par une liaison linéaire annulaire (E') d'axe parallèle à la première direction orthogonale (Y).

9. Module lumineux (1 ; 1') selon l'une des revendications 1 à 8, dans lequel l'unité lumineuse (10) comporte au moins deux collecteurs (12), au moins une source lumineuse (11) associée à chaque collecteur (12) et au moins un élément de connexion additionnel (43') disposé entre les deux collecteurs (12) et entre lesdits deux éléments de connexion (41, 42 ; 41', 42'), appelés éléments de connexion latéraux, selon la première direction orthogonale (Y), l'élément de connexion additionnel (43') s'étendant longitudinalement entre l'unité lumineuse (10) et l'élément optique de projection (20), et étant configuré et articulé de manière à permettre le premier déplacement de l'unité lumineuse (10) par rapport à l'élément optique de projection (20) ou le premier et le deuxième déplacement de l'unité lumineuse (10) par rapport à l'élément optique de projection (20).

10. Dispositif lumineux (100 ;100') de véhicule automobile comportant un boitier (101 ; 101') présentant un renfoncement et un module lumineux (1 ; 1') selon l'une des revendications 1 à 9, le module lumineux (1, 1') étant disposé dans ledit renfoncement.

11. Dispositif lumineux (100;100') selon la revendication 10 dans lequel le support (3) du module lumineux (1, 1') est formé par une portion du boitier ou une pièce solidaire au boitier.

12. Dispositif lumineux (100') selon la revendication 10 ou 11, dans lequel le boitier (101') comporte une ouverture disposée en avant du renfoncement, l'élément optique de projection (20) fermant l'ouverture du boitier (101').

## Patentansprüche

1. Lichtmodul (1; 1') für ein Kraftfahrzeug, wobei das Lichtmodul (1; 1') umfasst:
* eine Lichteinheit (10), umfassend:
- mindestens eine Lichtquelle (11), die dazu konfiguriert ist, Lichtstrahlen (R1) auszusenden,
- mindestens einen Kollektor (12), der der mindestens einen Lichtquelle (11) zugeordnet ist,
* ein optisches Projektionselement (20) mit einer optischen Achse (O), wobei der Kollektor (12) dazu konfiguriert ist, die von der mindestens einen Lichtquelle (11) ausgesandten Lichtstrahlen (R1) zu sammeln und auf das optische Projektionselement (20) auszurichten, wobei das optische Projektionselement (20) dazu konfiguriert ist, die Lichtstrahlen (R1) nach außen des Fahrzeugs zu projizieren, um einen Lichtstrahl (F1) zu erzeugen,
* einen Träger (3), an dem das optische Projektionselement (20) fest montiert ist;
* zwei Verbindungselemente (41, 42; 41', 42'), die jeweils einerseits mit der Lichteinheit (10) und andererseits mit dem Träger (3) verbunden sind, wobei jedes Verbindungselement so konfiguriert und gelenkig verbunden ist, dass eine erste Verschiebung der Lichteinheit (10) relativ zum optischen Projektionselement (20) ermöglicht wird, wobei die erste Verschiebung es ermöglicht, den Lichtstrahl (F1) in einer ersten orthogonalen Richtung (Y) relativ zur optischen Achse (O) des optischen Projektionselements (20) zu verschieben;
**dadurch gekennzeichnet, dass** jedes Verbindungselement (41, 42; 41', 42') einen Mittelabschnitt (411, 421), einen vorderen Abschnitt (412, 422; 412', 422') und einen hinteren Abschnitt (413, 423) aufweist, wobei der Mittelabschnitt und der hintere Abschnitt durch ein hinteres Drehgelenk (B, C) mit einer Achse, die orthogonal zur optischen Achse und zur ersten orthogonalen Richtung ist, gelenkig verbunden sind, und der Mittelabschnitt und der vordere Abschnitt durch ein vorderes Drehgelenk (A, D) mit einer Achse, die orthogonal zur optischen Achse und zur ersten orthogonalen Richtung ist, gelenkig verbunden sind.

2. Lichtmodul (1; 1') nach Anspruch 1, bei dem das optische Projektionselement (20) vor den vorderen Drehgelenken (A, D) angeordnet ist und die Lichteinheit (10) an den hinteren Abschnitten (413, 423) befestigt ist.

3. Lichtmodul (1; 1') nach Anspruch 2, bei dem die vorderen (B, C) und hinteren (A, D) Drehgelenke die Eckpunkte eines Parallelogramms definieren, projiziert in eine durch die optische Achse (O) und die erste orthogonale Richtung (Y) definierte Ebene.

4. Lichtmodul (1') nach einem der Ansprüche 1 bis 3, bei dem die erste Verschiebung der Lichteinheit (10) durch einen primären Aktuator (H1') aktiviert werden soll, wobei die Lichteinheit (10) dazu konfiguriert ist, mit dem primären Aktuator (H1') durch eine ringförmige Linearverbindung (F') mit einer Achse, die senkrecht zur ersten orthogonalen Richtung (Y) und zur optischen Achse (O) ist, verbunden zu werden.

5. Lichtmodul (1') nach einem der Ansprüche 1 bis 4, bei dem jedes Verbindungselement (41', 42') so konfiguriert und gelenkig verbunden ist, dass eine zweite Verschiebung der Lichteinheit (10) relativ zum optischen Projektionselement (20) ermöglicht wird, wobei die zweite Verschiebung es ermöglicht, den Lichtstrahl (F1) in einer zweiten orthogonalen Richtung (Z) relativ zur optischen Achse (O) des optischen Projektionselements (20) und orthogonal zur ersten orthogonalen Richtung (Y) zu verschieben.

6. Lichtmodul (1') nach Anspruch 5, bei dem der vordere Abschnitt (412', 422') jedes Verbindungselements mit dem Träger (3) durch ein zusätzliches Gelenk verbunden ist, das die Rotation der Lichteinheit (10) und der Verbindungselemente (41', 42') um eine Rotationsachse ermöglicht, die vor den vorderen Drehgelenken (A, D) liegt und entlang der ersten orthogonalen Richtung (Y) ausgerichtet ist.

7. Lichtmodul (1') nach Anspruch 6, bei dem das optische Projektionselement (20) eine mittlere Querachse (LL') aufweist, die mit der Rotationsachse zusammenfällt.

8. Lichtmodul (1') nach einem der Ansprüche 5 bis 7, bei dem die zweite Verschiebung der Lichteinheit (10) durch einen sekundären Aktuator (H2') aktiviert werden soll, wobei die Lichteinheit (10) dazu konfiguriert ist, mit dem sekundären Aktuator (H2') durch eine ringförmige Linearverbindung (E') mit einer Achse, die parallel zur ersten orthogonalen Richtung (Y) ist, verbunden zu werden.

9. Lichtmodul (1; 1') nach einem der Ansprüche 1 bis 8, bei dem die Lichteinheit (10) mindestens zwei Kollektoren (12), mindestens eine jedem Kollektor (12) zugeordnete Lichtquelle (11) und mindestens ein zusätzliches Verbindungselement (43') umfasst, das zwischen den zwei Kollektoren (12) und zwischen den zwei Verbindungselementen (41, 42; 41', 42'), die als seitliche Verbindungselemente bezeichnet werden, in der ersten orthogonalen Richtung (Y) angeordnet ist, wobei das zusätzliche Verbindungselement (43') sich längs zwischen der Lichteinheit (10) und dem optischen Projektionselement (20) erstreckt und so konfiguriert und gelenkig verbunden ist, dass die erste Verschiebung der Lichteinheit (10) relativ zum optischen Projektionselement (20) oder die erste und die zweite Verschiebung der Lichteinheit (10) relativ zum optischen Projektionselement (20) ermöglicht werden.

10. Lichtvorrichtung (100; 100') eines Kraftfahrzeugs, umfassend ein Gehäuse (101; 101') mit einer Vertiefung und ein Lichtmodul (1; 1') nach einem der Ansprüche 1 bis 9, wobei das Lichtmodul (1, 1') in der Vertiefung angeordnet ist.

11. Lichtvorrichtung (100; 100') nach Anspruch 10, bei der der Träger (3) des Lichtmoduls (1, 1') durch einen Abschnitt des Gehäuses oder ein mit dem Gehäuse fest verbundenes Teil gebildet wird.

12. Lichtvorrichtung (100') nach Anspruch 10 oder 11, bei der das Gehäuse (101') eine vor der Vertiefung angeordnete Öffnung aufweist, wobei das optische Projektionselement (20) die Öffnung des Gehäuses (101') verschließt.

## Claims

1. A luminous module (1; 1') for an automotive vehicle, said luminous module (1; 1') comprising:
*a luminous unit (10) comprising:
- at least one light source (11) configured to emit light rays (R1),
- at least one collector (12) associated with said at least one light source (11),
*an optical projection element (20) having an optical axis (O), said collector (12) being configured to collect and direct said light rays (R1) emitted by said at least one light source (11) toward the optical projection element (20), said optical projection element (20) being configured to project said light rays (R1) toward the outside of said vehicle to form a light beam (F1),
*a support (3) on which the optical projection element (20) is fixedly mounted;
*two connection elements (41, 42 ; 41', 42') each connected on the one hand to the luminous unit (10) and on the other hand to the support (3), each connection element being configured and articulated in such a way as to allow a first movement of the luminous unit (10) relative to the optical projection element (20), said first movement allowing the light beam (F1) to be moved in a first direction (Y) orthogonal to the optical axis (O) of the optical projection element (20); **characterized in that** each connection element (41, 42; 41', 42') comprises a central portion (411, 421), a front portion (412, 422; 412', 422') and a rear portion (413, 423), the central portion and the rear portion being articulated by a rear pivot connection (B, C) with an axis orthogonal to the optical axis and to the first orthogonal direction, and the central portion and the front portion being articulated by a front pivot connection (A, D) with an axis orthogonal to the optical axis and to the first orthogonal direction

2. The luminous module (1; 1') as claimed in claim 1, wherein the optical projection element (20) is arranged in front of the front pivot connections (A, D) and the luminous unit (10) is attached to the rear portions (413, 423).

3. The luminous module (1; 1') as claimed in claim 2 , wherein the front (B, C) and rear (A, D) pivot connections define the vertices of a parallelogram, in projection in a plane defined by the optical axis (O) and the first orthogonal direction (Y).

4. The luminous module (1') as claimed in one of claims 1 to 3, wherein the first movement of the luminous unit (10) is intended to be activated by a primary actuator (H1'), said luminous unit (10) being configured to be connected to the primary actuator (H1') by an annular linear connection (F') with an axis perpendicular to the first orthogonal direction (Y) and to the optical axis (O).

5. The luminous module (1') as claimed in one of claims 1 to 4, wherein each connection element (41' 42') is configured and articulated in such a way as to allow a second movement of the luminous unit (10) relative to the optical projection element (20), said second movement allowing the light beam (F1) to be moved in a second direction (Z) orthogonal to the optical axis (O) of the optical projection element (20), and orthogonal to the first orthogonal direction (Y).

6. The luminous module (1') as claimed in claim 5, wherein the front portion (412', 422') of each connection element is connected to the support (3) by an additional articulation allowing the rotation of the luminous unit (10) and the connection elements (41', 42') about an axis of rotation located in front of the front pivot connections (A, D) and oriented in the first orthogonal direction (Y).

7. The luminous module (1') as claimed in claim 6, wherein the optical projection element (20) comprises a median transverse axis (LL') coinciding with the axis of rotation.

8. The luminous module (1') as claimed in one of claims 5 to 7, wherein the second movement of the luminous unit (10) is intended to be activated by a secondary actuator (H2'), said luminous unit (10) being configured to be connected to the secondary actuator (H2') by an annular linear connection (E') with an axis parallel to the first orthogonal direction (Y).

9. The luminous module (1; 1') as claimed in one of claims 1 to 8, wherein the luminous unit (10) comprises at least two collectors (12), at least one light source (11) associated with each collector (12), and at least one additional connection element (43') arranged between the two collectors (12) and between said two connection elements (41, 42; 41', 42'), referred to as lateral connection elements, in the first orthogonal direction (Y), the additional connection element (43') extending longitudinally between the luminous unit (10) and the optical projection element (20), and being configured and articulated in such a way as to allow the first movement of the luminous unit (10) relative to the optical projection element (20), or the first and second movement of the luminous unit (10) relative to the optical projection element (20).

10. A luminous device (100; 100') for an automotive vehicle, comprising a housing (101; 101') having a recess and a luminous module (1; 1') as claimed in one of claims 1 to 9, the luminous module (1; 1') being arranged in said recess.

11. The luminous device (100; 100') as claimed in claim 10, wherein the support (3) of the luminous module (1, 1') is formed by a portion of the housing or a part rigidly secured to the housing.

12. The luminous device (100') as claimed in claim 10 or 11, wherein the housing (101') comprises an opening arranged in front of the recess, the optical projection element (20) closing off the opening of the housing (101').
